# EUROPEAN PATENT SPECIFICATION

(11) **EP 1 607 274 B1**
(45) Date of publication and mention of the grant of the patent: **13.08.2008**
(21) Application number: 05011235.8
(22) Date of filing: 24.05.2005
(51) Int. Cl.: B60R 21/16

(54) **Curtain airbag device**
Vorhang-Airbageinrichtung
Dispositif de coussin gonflable de type rideau

(30) Priority: 14.06.2004 JP 2004175679
(43) Date of publication of application: 21.12.2005
(73) Proprietor: TAKATA CORPORATION, Minato-ku, Tokyo 106-8510 (JP)
(72) Inventor: Noguchi, Atsushi, Minato-ku Tokyo 106-8510 (JP); Mitsuo, Tetsu, Minato-ku Tokyo 106-8510 (JP)
(74) Representative: Banzer, Hans-Jörg

(56) References cited:
- EP-A- 1 184 235
- DE-U1- 9 321 654
- US-A- 6 010 149

## Description

The present invention relates to a curtain airbag device including a curtain airbag that inflates along, for example, a window on a side-door when a vehicle is involved in, for example, a side-on collision or rollover.

### [Background Art]

A curtain airbag in a typical curtain airbag device is disposed adjacent to an inner edge part of a vehicle cabin where the ceiling and a side surface meet. When gas is introduced into the curtain airbag through a gas-entrance hole, the curtain airbag inflates along, for example, a window on a side-door.

In addition to reducing impact by restraining, for example, the head of a vehicle occupant, this curtain airbag is capable of keeping a vehicle occupant inside the vehicle cabin (i.e. a function for holding a vehicle occupant inside a vehicle cabin).

Japanese Unexamined Patent Application Publication No. 2002-220023 discloses a curtain airbag device having a curtain airbag whose rear portion is provided with a triangular non-inflatable fabric. A tip section of the triangular fabric is mounted on a roof-side rail.

According to this curtain airbag device, when the curtain airbag is to be inflated, a lower tip section of the triangular non-inflatable fabric is pulled downward. This creates high tension at the lower edge of the curtain airbag in the front-rear direction of the vehicle body. On the other hand, the tension at a region above the lower edge of the curtain airbag becomes relatively lower. This creates a state in which the curtain airbag has a hammock-like structure, and thus improves the function for holding a vehicle occupant inside a vehicle cabin.

A curtain airbag device according to the preamble of independent claim is known from US 6,010,149 A. This document discloses a curtain airbag with a plurality of attachment parts at a front edge of the curtain airbag, whereby the attachment parts are to be mounted at a common intermediate position of a front pillar with respect to a vertical direction. Furthermore, DE 93 21 654 U1 also discloses a curtain airbag device according to the preamble of independent claim 1, whereby the attachment parts of this curtain airbag device are to be mounted at adjacent intermediate positions of the front pillar with respect to the vertical direction.

A further curtain airbag device is known from EP 1 184 235 A1, whereby this curtain airbag device comprises two attachment parts which are arranged spaced from one another with respect to the vertical direction along the front edge of the curtain airbag. Both attachment parts are mounted at a common attachment position of the front pillar, whereby the lower attachment part substantially extends in the horizontal direction even if the curtain airbag is in its inflated state.

### [Problems to be Solved by the Invention]

It is an object of the present invention to provide a curtain airbag device in which a function for holding a vehicle occupant inside a vehicle cabin is further improved.

### [Means for Solving the Problems]

According to the invention, this object is achieved by a curtain airbag device as defined in claim 1. The dependent claims define preferred and advantageous embodiments of the invention.

A curtain airbag device according to an aspect of the present invention includes a curtain airbag extending along a front pillar and a roof side, and a gas generator for inflating the curtain airbag. A front edge of the curtain airbag extends along the front pillar and is provided with attachment parts disposed at multiple sections of the front edge with respect to a vertical direction, the attachment parts being mounted on the front pillar. The attachment parts are mounted at a common intermediate position or adjacent intermediate positions of the front pillar with respect to the vertical direction.

A non-inflatable portion is provided between two adjacent attachment part at a front portion of the curtain airbag.

In the curtain airbag device according to the aspect of the present invention, the attachment parts may be mounted on the front pillar with a common mounting component.

Furthermore, in the curtain airbag device according to the aspect of the present invention, the attachment parts may be provided in at least three sections of the front edge of the curtain airbag, said at least three sections including an upper section, a lower section, and an intermediate section.

### [Advantages]

According to the curtain airbag device of the present invention, when the curtain airbag is deployed, a high tension is generated in the front-rear direction of the vehicle body at both the upper and lower portions of the front region of the curtain airbag. Accordingly, when the body of a vehicle occupant hits against the front region of the curtain airbag, the body is automatically drawn towards the center of the curtain airbag with respect to the vertical direction. This contributes to a further improvement in the function for holding a vehicle occupant inside a vehicle cabin.

According to the present invention, since the attachment parts may be mounted on the front pillar with a common mounting component, the number of mounting components and the number of mounting processes can be reduced. Alternatively, the attachment parts may be mounted on the front pillar in a separate manner at different positions.

According to the present invention, only an upper attachment part and a lower attachment part disposed at the front edge of the curtain airbag may be mounted on the front pillar at a common intermediate position or adjacent intermediate positions of the front pillar. Alternatively, at least one intermediate section of the front edge may be provided with an additional attachment part, such that this attachment part may be mounted on the front pillar together with the upper and lower attachment parts at a common intermediate position, or may be mounted on the front edge in a separate manner at an adjacent intermediate position.

### [Brief Description of the Drawings]

Fig. 1 includes diagrams illustrating a curtain airbag according to an embodiment of the present invention.
Fig. 2 includes diagrams illustrating a curtain airbag according to an alternative embodiment.
Fig. 3 illustrates a curtain airbag according to another alternative embodiment.

### [Best Mode for Carrying Out the Invention]

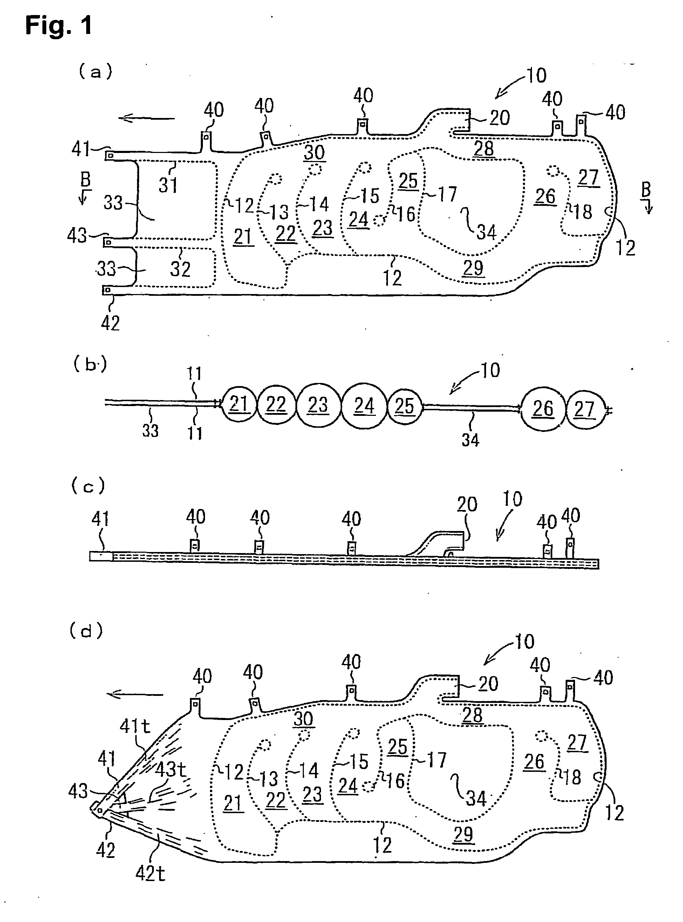

Embodiments according to the present invention will now be described with reference to the drawings. Fig. 1(a) is a front view of a curtain airbag according to an embodiment of the present invention as viewed from the inside of a vehicle cabin. Fig. 1(b) is a cross-sectional view taken along line B-B in Fig. 1(a). Fig. 1(c) is a front view of the curtain airbag in a folded state. Fig. 1(d) illustrates the curtain airbag in a deployed state. In the description below, the terms "front" and "rear" respectively correspond to the front and the rear of a vehicle in which the curtain airbag is installed.

Fig. 1(a) illustrates an inflated state in which attachment parts are not mounted on a front pillar, whereas Fig. 1(d) illustrates an inflated state in which the attachment parts are mounted on the front pillar.

A curtain airbag 10 (which may simply be referred to as an "airbag" hereinafter) according to this embodiment in a folded state extends from the front pillar to a rear end of a roof side of a vehicle. When the vehicle is involved in, for example, a side-on collision or rollover, the airbag 10 is deployed along an inner side surface of the vehicle cabin so as to form a substantially rectangular curtain that covers an upper half of the inner side surface of the vehicle cabin.

The airbag 10 includes two layers of sheets 11, which are combined with each other via a linear connected portion 12 extending around the periphery of the airbag 10 (a part of the linear connected portion 12 extends towards the central portion of the airbag 10) and also via linear connected portions 13 to 18, 31, and 32 extending at the inner side of the periphery. When gas is introduced between the sheets 11, the airbag 10 becomes inflated. The linear connected portions 13 to 18, 31, and 32 are formed using connecting means, such as stitching, bonding, or welding.

A substantially L-shaped projection extends from the upper edge of the airbag 10 and is disposed near the center of the upper edge with respect to the longitudinal direction of the airbag 10. The projection is provided with a gas-entrance hole 20 for the airbag 10. The gas-entrance hole 20 is connected with a gas generator (not shown) for inflating the airbag 10.

The linear connected portions 13 to 15 are connected with the lower side of the linear connected portion 12 and extend upward from the lower side, but are not connected with the upper side of the linear connected portion 12. The linear connected portion 17 has a substantially rectangular shape. The linear connected portion 16 extends downward from an upper front section of the linear connected portion 17 so as to form a substantially L-shape, but is not connected with the lower side of the linear connected portion 12.

The linear connected portion 18 extends upward from the rear side of the linear connected portion 12 to form a substantially L-shape, but is not connected with the upper side of the linear connected portion 12.

The linear connected portions 12 to 18 define long separate chambers 21 to 27 extending in the vertical direction. The upper portions of the chambers 21 to 24, 26 and 27 communicate with the gas-entrance hole 20.

The lower portion of the chamber 25 communicates with the lower portion of the chamber 24. The upper side of the linear connected portion 17 and the upper side of the linear connected portion 12 have a long horizontal chamber 28 disposed therebetween, and the lower side of the linear connected portion 17 and the lower side of the linear connected portion 12 have a long horizontal chamber 29 disposed therebetween.

The chambers 26 and 27 communicate with the gas-entrance hole 20 via the chamber 28. The lower portions of the chambers 25 and 26 communicate with each other via the chamber 29. The inner region of the linear connected portion 17 defines a non-inflatable portion 34.

The front side of the linear connected portion 12 is disposed distant from the front edge of the curtain airbag 10 towards the rear of the curtain airbag 10. The curtain airbag 10 has non-inflatable portions 33 at its front region. The curtain airbag 10 has three tab-like or short-belt-like attachment parts 41, 42, and 43, which respectively extend forward from an upper section, a lower section, and an intermediate section of the front edge of the curtain airbag 10. The attachment parts 41, 42, and 43 are each provided with a through-hole through which a mounting component, such as a bolt or a rivet, can be inserted. While being disposed over top of one another, the attachment parts 41, 42, and 43 are mounted at an intermediate position of the front pillar with respect to the vertical direction by using a common mounting component.

The attachment parts 41 and 43 have a U-shaped linear connected portion 31 therebetween, and the attachment parts 43 and 42 have a U-shaped linear connected portion 32 therebetween.

The rear sides of the linear connected portions 31 and 32 are disposed adjacent to the front side of the linear connected portion 12.

The upper edge of the curtain airbag 10 is provided with a plurality of earlobe-like tabs 40 disposed at intervals along the upper edge. Each tab 40 is mounted on a roof-side rail by using a mounting component, such as a bolt or a rivet.

The airbag 10 installed on the front pillar and the roof-side rail is covered with an appropriate cover, such as a pillar trim or a roof trim (not shown).

According to a curtain airbag device having the structure described above, when a vehicle is involved in a side-on collision or rollover, an inflator is activated in order to supply the airbag 10 with gas. The gas from the inflator inflates the curtain airbag 10 as shown in Fig. 1(d).

In this case, because the attachment parts 41, 42, and 43 are mounted together at a common position of the front pillar, high tensions are generated at areas 41t, 42t, and 43t, which are rear extensions of the attachment parts 41, 42, and 43, respectively. This creates a state in which the high-tensile areas 41t, 42t, and 43t are strained. Consequently, the non-inflatable portions 33 in the front region of the curtain airbag 10 form a hammock-like structure. When the body of a vehicle occupant hits against these hammock-like portions, the body is caught and received by low-tensile areas intervening the high-tensile areas 41t, 42t, and 43t. This effectively restrains the vehicle occupant moving towards the outside of the vehicle.

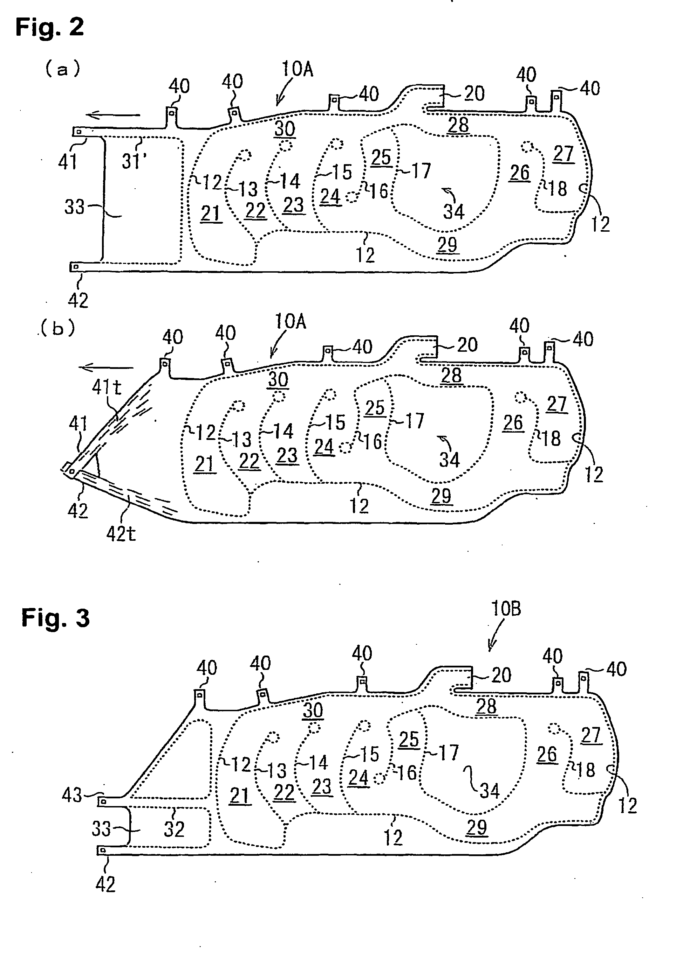

As an alternative to the structure shown in Fig. 1 in which the three attachment parts are provided at the upper, lower, and intermediate sections, Figs. 2(a) and 2(b) illustrates a curtain airbag 10A provided with only two of the attachment parts disposed at the upper and lower sections. When the curtain airbag 10A is inflated, the high-tensile areas 41t and 42t, which are rear extensions of the attachment parts 41 and 42, are formed. Consequently, one non-inflatable portion 33 in the front region of the curtain airbag 10A forms a hammock-like structure. This improves the properties for restraining the body of a vehicle occupant moving towards the outside of a vehicle. Furthermore, the non-inflatable portion 33 is surrounded by a U-shaped linear connected portion 31'.

According to the present invention, if the overall length of the front pillar is defined as L, the attachment parts 41 and 42 or the attachment parts 41 to 43 are preferably mounted on the front pillar at a position within a distance range of (0.5 x L) to (0.9 x L) from the top end of the front pillar.

Alternatively, the attachment parts 41 and 42 or the attachment parts 41 to 43 may be mounted on the front pillar at different positions. In that case, the distance between the mounting positions (namely, the distance between the uppermost attachment part and the lowermost attachment part) is preferably set at 10 cm or less.

According to the present invention, the curtain airbag may have an alternative structure in which an upper portion of the front edge of the curtain airbag is inclined towards the rear, as shown in Fig. 3. In Fig. 3, a portion of the front edge above the attachment part 43 is inclined, and the attachment part 41 is not provided. Other than that, the structure shown in Fig. 3 is the same as that shown in Fig. 1(a), and therefore, the same components are indicated by the same reference numerals.

Each of the embodiments above is only an example of the present invention, and the present invention is not limited to the embodiments shown in the drawings. For example, the inflatable chambers may be set at positions other than those shown in the drawings. Moreover, the rear side of the curtain airbag may also be provided with attachment parts to be mounted on, for example, a C pillar. Furthermore, a guiding mechanism for guiding the inflating curtain airbag may be provided.

## Claims

1. A curtain airbag device comprising a curtain airbag (10; 10A; 10B) extending along a front pillar and a roof side; and a gas generator for inflating the curtain airbag (10; 10A; 10B),
wherein a front edge of the curtain airbag (10; 10A; 10B) extends along the front pillar and is provided with tab-like or short-belt like attachment parts (41-43; 41-42; 42-43) disposed at multiple sections of the front edge with respect to a vertical direction, the attachment parts (41-43; 41-42; 42-43) being mounted on the front pillar, and
wherein the attachment parts (41-43; 41-42; 42-43) are mounted at a common intermediate position or adjacent intermediate positions of the front pillar with respect to the vertical direction,
**characterized in that**
a non-inflatable portion (33) is provided at a front portion of the curtain airbag (10; 10A; 10B) between two adjacent ones of the tab-like or short-belt like attachment parts (41-43; 41-42; 42-43).

2. The curtain airbag device according to Claim 1, wherein the attachment parts (41-43; 41-42; 42-43) are mounted on the front pillar with a common mounting component.

3. The curtain airbag device according to one of Claims 1 and 2, wherein the attachment parts (41-43) are provided in at least three sections of the front edge of the curtain airbag (10), said at least three sections including an upper section, a lower section, and an intermediate section.

4. The curtain airbag device according to any one of Claims 1-3, wherein the non-inflatable portion (33) is surrounded by a U-shaped linear connected portion (31, 32) between the two adjacent tab-like or short-belt like attachment parts (41-43; 41-42; 42-43).

5. The curtain airbag device according to any one of Claims 1-4, wherein the non-inflatable portion (33) forms a hammock-like structure when the curtain airbag (10; 10A; 10B) is inflated.

## Patentansprüche

1. Vorhangairbagvorrichtung, umfassend einen Vorhangairbag (10; 10A; 10B), welcher sich entlang einer Vordersäule und einer Dachseite erstreckt; und einen Gaserzeuger zum Aufblasen des Vorhangairbags (10; 10A; 10B),
wobei sich ein Vorderrand des Vorhangairbags (10; 10A; 10B) entlang der Vordersäule erstreckt und mit Befestigungsteilen (41-43; 41-42; 42-43), welche streifenähnlich oder ähnlich einem kurzen Gurt sind und welche an mehreren Abschnitten des Vorderrands in Bezug auf eine vertikale Richtung angeordnet sind, versehen ist, wobei die Befestigungsteile (41-43; 41-42; 42-43) an der Vordersäule angebracht sind, und
wobei die Befestigungsteile (41-43; 41-42; 42-43) an einer gemeinsamen Zwischenposition oder benachbarten Zwischenpositionen der Vordersäule in Bezug auf die vertikale Richtung angebracht sind,
**dadurch gekennzeichnet, dass**
ein nichtaufblasbarer Abschnitt (33) an einem Vorderabschnitt des Vorhangairbags (10; 10A; 10B) zwischen zwei benachbarten Befestigungsteilen (41-43; 41-42; 42-43), welche streifenähnlich oder ähnlich einem kurzen Gurt sind, vorgesehen ist.

2. Vorhangairbagvorrichtung nach Anspruch 1, wobei die Befestigungsteile (41-43; 41-42; 42-43) an der Vordersäule mit einer gemeinsamen Befestigungskomponente angebracht sind.

3. Vorhangairbagvorrichtung nach einem der Ansprüche 1 oder 2, wobei die Befestigungsteile (41-43) in mindestens drei Abschnitten des Vorderrands des Vorhangairbags (10) vorgesehen sind, wobei die mindestens drei Abschnitte einen oberen Abschnitt, einen unteren Abschnitt und einen dazwischen liegenden Abschnitt aufweisen.

4. Vorhangairbagvorrichtung nach einem der Ansprüche 1-3, wobei der nichtaufblasbare Abschnitt (33) von einem U-förmigen linear verbundenen Abschnitt (31, 32) zwischen den zwei benachbarten Befestigungsteilen (41-43; 41-42; 42-43), welche streifenähnlich oder ähnlich einem kurzen Gurt sind, umgeben ist.

5. Vorhangairbagvorrichtung nach einem der Ansprüche 1-4, wobei der nichtaufblasbare Abschnitt (33) eine hängemattenähnliche Struktur ausbildet, wenn der Vorhangairbag (10; 10A; 10B) aufgeblasen ist.

## Revendications

1. Dispositif de rideau gonflable comprenant un rideau gonflable (10 ; 10A ; 10B) s'étendant le long d'un montant avant et d'un bord de toit ; et un générateur de gaz pour gonfler le rideau gonflable (10 ; 10A ; 10B),
dans lequel un bord avant du rideau gonflable (10 ; 10A ; 10B) s'étend le long du montant avant et est doté de pièces de fixation de type languette ou de type petite courroie (41 à 43 ; 41 à 42 ; 42 à 43) disposées au niveau de multiples sections du bord avant par rapport à une direction verticale, les pièces de fixation (41 à 43 ; 41 à 42 ; 42 à 43) étant montées sur le montant avant, et
dans lequel les pièces de fixation (41 à 43 ; 41 à 42 ; 42 à 43) sont montées au niveau d'une position intermédiaire commune ou de positions intermédiaires adjacentes du montant avant par rapport à la direction verticale,
**caractérisé en ce que**
une partie non gonflable (33) est disposée au niveau d'une partie avant du rideau gonflable (10 ; 10A ; 10B) entre deux pièces adjacentes parmi les pièces de fixation de type languette ou de type petite courroie (41 à 43 ; 41 à 42 ; 42 à 43).

2. Dispositif de rideau gonflable selon la revendication 1, dans lequel les pièces de fixation (41 à 43 ; 41 à 42 ; 42 à 43) sont montées sur le montant avant avec un composant de montage commun.

3. Dispositif de rideau gonflable selon l'une des revendications 1 et 2,
dans lequel les pièces de fixation (41 à 43) sont disposées dans au moins trois sections du bord avant du rideau gonflable (10), lesdites au moins trois sections comprenant une section supérieure, une section inférieure et une section intermédiaire.

4. Dispositif de rideau gonflable selon l'une quelconque des revendications 1 à 3, dans lequel la partie non gonflable (33) est entourée par une partie raccordée linéaire en U (31, 32) entre les deux pièces adjacentes de fixation de type languette ou de type petite courroie (41 à 43 ; 41 à 42 ; 42 à 43).

5. Dispositif de rideau gonflable selon l'une quelconque des revendications 1 à 4, dans lequel la partie non gonflable (33) forme une structure en hamac lorsque le rideau gonflable (10 ; 10A ; 10B) est gonflé.
